# EUROPÄISCHE PATENTSCHRIFT

(11) **EP 3 074 254 B1**
(45) Veröffentlichungstag und Bekanntmachung des Hinweises auf die Patenterteilung: **10.04.2019**
(21) Anmeldenummer: 14828133.0
(22) Anmeldetag: 19.11.2014
(51) Int. Cl.: B60K 1/00

(54) **HYBRIDMODUL UND LEISTUNGSELEKTRONIKMODUL MIT EINEM GEMEINSAMEN KÜHLSTROM**
HYBRID MODULE AND POWER ELECTRONICS MODULE WITH A COMMON COOLANT FLOW
MODULE HYBRIDE ET MODULE ÉLECTRONIQUE DE PUISSANCE COMPORTANT UN FLUX DE REFROIDISSEMENT COMMUN

(30) Priorität: 26.11.2013 DE 102013224086
(43) Veröffentlichungstag der Anmeldung: 05.10.2016
(73) Patentinhaber: Schaeffler Technologies AG & Co. KG, 91074 Herzogenaurach (DE)
(72) Erfinder: MACKOWIAK, Stefan, 76316 Malsch (DE); BLAES, Cédric, F-67470 Munchhausen (FR)
(86) Internationale Anmeldenummer: PCT/DE2014/200648
(87) Internationale Veröffentlichungsnummer: WO 2015/078465

(56) Entgegenhaltungen:
- EP-A2- 1 000 790
- EP-A2- 1 049 235
- EP-A2- 2 520 452
- JP-A- 2010 213 447
- US-A1- 2010 127 583

## Beschreibung

Die Erfindung betrifft eine Hybridantriebseinheit mit einem Leistungselektronikmodul und einem Hybridmodul für hybrid angetriebene Maschinen, insbesondere für Fahrzeuge mit Hybridantrieb, die eine Kombination aus Elektro- und Verbrennungsmotor aufweisen, gemäß dem Oberbegriff des Anspruchs 1.

Die DE 10 2012 222 110 A1 zeigt eine Kupplungseinrichtung mit einer Betätigungseinrichtung für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits angeordnet ist, wobei die Kupplungseinrichtung und die Betätigungseinrichtung in den Rotor der elektrischen Maschine integriert sind, um die Kupplungseinrichtung baulich und/oder funktional zu verbessern.

Aus der EP 1 000 790 A2 ist eine Hybridantriebseinheit gemäß dem Oberbegriff des Anspruchs 1 bekannt.

Bezüglich weiteren Standes der Technik wird auf die JP 2010 21347 A, die US 2010/127583 A1, die EP 2 520 452 A2 und die EP 1 049 235 A2 verwiesen.

Die Erfinder haben sich die Aufgabe gestellt, den vorliegenden Stand der Technik noch weiter zu verbessern. Insbesondere sollen Kosten und/oder Montageaufwand verringert und/oder Betriebssicherheit erhöht werden.

Diese Aufgabe wird mit den in Anspruch 1 angegebenen Maßnahmen gelöst.

Weitere vorteilhafte Ausgestaltungen sind Gegenstand der abhängigen Ansprüche.

Hierdurch ist es möglich, denselben Kühlmittelstrom in zwei Modulen zur Kühlung zu verwenden. Weiterhin wird ein jeweils separater Kühlmittelstrom für das Hybridmodul und das Leistungselektronikmodul vermieden, wodurch Kosten gespart werden, Montageaufwand vermindert wird und Sicherheit (es müssen weniger Schläuche oder Kanäle verlegt werden) erhöht wird. Damit lassen sich insbesondere Kosten hinsichtlich zusätzlicher Schläuche, Schelle, Konnektoren etc. einsparen.

Sofern ein nicht näher bezeichnetes Modul erwähnt wird, können darunter entweder das Hybridmodul oder das Leistungselektronikmodul oder beide Module verstanden werden.

Hybridmodulseitig bedeutet bevorzugt, dass sich das derart bezeichnete Bauteil in Bezug auf die Schnittstelle zwischen Hybridmodul und Leistungselektronikmodul auf der Seite des Hybridmoduls befindet und dass es insofern dem Hybridmodul zugeordnet ist. Leistungselektronikmodulseitig bedeutet bevorzugt, dass sich das derart bezeichnete Bauteil in Bezug auf die Schnittstelle zwischen Hybridmodul und Leistungselektronikmodul auf der Seite des Leistungselektronikmoduls befindet und dass es insofern dem Leistungselektronikmodul zugeordnet ist.

Ein Hybridmodul ist bevorzugt ein Kopplungsmodul, welches als elektrische Antriebseinheit einen E-Motor (Elektromotor) und bevorzugt eine Kupplung, bevorzugt eine Trennkupplung, besonders bevorzugt mit einem zusätzlichen Dämpfersystem enthält. Es wird oder ist bevorzugt axial zwischen einem Verbrennungsmotor und der Abtriebsseite, z.B. Räder, bevorzugt mit einem dem Hybridmodul und der Abtriebsseite zwischengeschalteten Getriebe angeordnet. Das Hybridmodul ist bevorzugt ein Kraftfahrzeug-Hybridmodul. Bevorzugt weist das Hybridmodul ein Hybridmodulgehäuse auf. Ein Hybridmodulgehäuse ist bevorzugt eine zumindest teilweise die elektrische Antriebseinheit und/oder zumindest teilweise die Kupplung des Hybridmoduls umgebende Hülle. Besonders bevorzugt umschließt das Hybridmodulgehäuse die elektrische Antriebseinheit und/oder die Kupplung dichtend gegenüber einem Fluid, z.B. Kühlfluid. In dem Hybridmodulgehäuse ist/sind bevorzugt ein oder mehrere Kühlfluidkanäle vorhanden, in denen Fluid fließt, bevorzugt zirkuliert. Bevorzugt weist das Hybridmodulgehäuse eine erste, bevorzugt auch eine zweite Öffnung auf, durch welche ein Kühlmittel strömen kann. Das Hybridmodul weist bevorzugt einen E-Motorstromanschluss und/oder einen elektrischen Signal- und/oder Kupplungsaktorikanschluss und/oder einen Kühlmittelanschluss auf, wobei zumindest eine, bevorzugt zwei, besonders bevorzugt alle dieser Anschlüsse mit einem entsprechenden leistungselektronikmodulseitigen Anschluss direkt verbunden ist. Z.B. ist der E-Motorstromanschluss, bevorzugt auch der elektrischen Signal- und/oder Kupplungsaktorikanschluss, besonders bevorzugt auch der Kühlmittelanschluss mit einem entsprechenden leistungselektronikmodulseitigen Anschluss direkt verbunden.

Eine Hybridantriebseinheit ist bevorzugt eine kombinierte Antriebseinheit mit zwei verschiedenen Antriebseinheiten, z.B. einem Verbrennungsmotor und einem Elektromotor.

Ein Leistungselektronikmodul ist bevorzugt ein Verbund verschiedener Komponenten, welche einen Strom an den E-Motor des Hybridmoduls steuern oder regeln, bevorzugt inklusive hierzu benötigter peripherer Bauteile wie Kühlelemente oder Netzteile. Insbesondere enthält das Leistungselektronikmodul Leistungselektronik bzw. ein oder mehrere Leistungselektronikbauteile, welche zur Steuerung oder Regelung eines Stroms eingerichtet sind. Dabei handelt es sich besonders bevorzugt um einen oder mehrere Leistungsschalter, z.B. Leistungstransistoren. Besonders bevorzugt weist die Leistungselektronik mehr als zwei, besonders bevorzugt drei voneinander getrennte Phasen bzw. Strompfade mit mindestens je einem eigenen Leistungselektronikbauteil auf. Die Leistungselektronik ist bevorzugt ausgelegt, pro Phase eine Leistung mit einer Spitzenleistung, bevorzugt Dauerleistung, von mindestens 10 W, bevorzugt mindestens 100 W besonders bevorzugt mindestens 1000 W zu steuern oder regeln. Bevorzugt ist das Leistungselektronikmodul an einem Bauteil des Hybridmoduls angeordnet, z.B. an dem Hybridmodulgehäuse, bevorzugt an einem in dem Hybridmodulgehäuse befindlichen Bauteil des Hybridmoduls, z.B. ein Statorblech. Bevorzugt wird das Leistungselektronikmodul an das Bauteil des Hybridmoduls vor der Montage des Hybridmoduls in die Hybridantriebseinheit, z.B. vor der Montage des Hybridmoduls in den Motorbereich eines Kraftfahrzeugs, vormontiert. Bevorzugt weist das Leistungselektronikmodul ein Leistungselektronikgehäuse auf, welches die Leistungselektronik und bevorzugt weitere Elektronik ganz oder zumindest teilweise umschließt. Bevorzugt weist das Leistungselektronikgehäuse ein erste und bevorzugt auch eine zweite Öffnung auf, durch welche ein Kühlmittel strömen kann. Bevorzugt ist die zweite Öffnungen mehr als die Hälfte einer Ausdehnung des Leistungselektronikgehäuses von erster Öffnung entfernt. Bevorzugt weist das Leistungselektronikmodul eine thermisch mit einer Elektronik gekoppelte Kühleinrichtung auf.

Bevorzugt weist das Leistungselektronikmodul zusätzlich Steuerelektronik und/oder Sensorelektronik für das Hybridmodul auf, z.B. ein Steuergerät (z.B. ACU - actuator control unit) für den Kupplungsaktor, z.B. elektrischer Zentralausrücker. Das Leistungselektronikmodul weist bevorzugt einen elektrischen Signal- und/oder Kupplungsaktorikanschluss und/oder einen Kühlmittelanschluss auf, welche jeweils mit einem entsprechenden hybridmodulseitigen Anschluss direkt verbunden sind.

Das Hybridmodul ist mittels des Leistungselektronikmoduls betreibbar, bevorzugt indem das Leistungselektronikmodul elektrischen Strom in das Hybridmodul leitet, z.B. an eine Statorwicklung des E-Motors.

Bevorzugt ist das Hybridmodul an das Leistungselektronikmodul mittels eines Kanals und/oder Schlauchs verbindbar oder umgekehrt. Bevorzugt sind das Hybridmodul und das Leistungselektronikmodul eingerichtet, mindestens einen gemeinsamen Kühlmittelstrom zu führen, z.B. mittels mindestens eines Kanals und/oder Schlauchs, mittels welchem das Hybridmodul und das Leistungselektronikmodul verbindbar oder verbunden sind. Bevorzugt weisen sie einen gemeinsamen Kühlkreislauf auf.

Eine Strömungsführung leitet bevorzugt ein Kühlmittel in vorgegebenen Richtungen. Sie ist z.B. eine Kühlmittelleitung, ein Kanal, Schlauch oder Kanal- und/oder Schlauchsystem.

Ein Kühlmittel bzw. Kühlmedium ist z.B. Wasser, Kühlflüssigkeit oder Luft. Ein Kühlmittelstrom ist bevorzugt ein Kühlmittelkreislauf.

Durchströmbar oder Durchströmen bedeutet bevorzugt, dass das Kühlmittel an einem Punkt (z.B. einer Öffnung) in das Modul hinein- und an einem anderen Punkt (z.B. andere Öffnung) aus dem Modul hinausströmt oder hinausströmen kann. Bevorzugt ist hierfür ein Auslass des einen Moduls an den Einlass des anderen Moduls anschließbar.

Bei einem weiteren erfindungsgemäßen Hybridmodul weist das Hybridmodul einen den Kühlmittelstrom leitenden, hybridmodulseitigen Kühlmittelanschluss zum direkten Anschluss an einen an dem Leistungselektronikmodul vorhandenen leistungselektronikmodulseitigen Kühlmittelanschluss auf. Bei einem weiteren erfindungsgemäßen Leistungselektronikmodul weist dieses einen den Kühlmittelstrom leitenden, leistungselektronikmodulseitigen Kühlmittelanschluss zum direkten Anschluss an einen an dem Hybridmodul vorhandenen, hybridmodulseitigen Kühlmittelanschluss auf. Bei einem weiteren erfindungsgemäßen Verfahren wird ein leistungselektronikmodulseitiger Kühlmittelanschluss direkt an einen an dem Hybridmodul vorhandenen hybridmodulseitigen Kühlmittelanschluss angeschlossen.

Hierdurch wird eine direkte Anschlussmöglichkeit zwischen den Modulen bereitgestellt, um Kühlmittel gezielt von einem in das andere Modul zu überführen, was insbesondere wiederum kostengünstiger, einfacher in der Montage und sicherer ist.

Ein Kühlmittelanschluss ist bevorzugt an einer Außenseite eines Gehäuses des Moduls angeordnet. Er weist bevorzugt eine Öffnung im Gehäuse des Moduls am Anbringungspunkt des Kühlmittelanschlusses auf, besonders bevorzugt ein die Öffnung umlaufendes Dichtungselement. Bevorzugt weist ein Kühlmittelanschluss ein, die Öffnung umgebendes, aus dem Gehäuse des Moduls vorstehendes (bevorzugt mehr als 0 mm, besonders mehr als 5 mm, besonders bevorzugt mehr als 10 mm vorstehendes) Bauteil auf, z.B. einen Kamin, ein Rohrstück oder rohrartiges Bauteil, oder einen Stutzen. Das Bauteil weist bevorzugt konische Teilstücke und/oder eine/mehrere Nute/n auf, was Verbindungsqualität (z.B. Dichtigkeit, Festigkeit) verbessert. Es ist bevorzugt am Gehäuse befestigt, z.B. angeschraubt, angeklebt, angeschweißt oder angegossen. Z.B. ist ein Stutzen an dem Hybridmodulgehäuse angegossen. Bevorzugt weist das Modul zwei oder mehr Kühlmittelanschlüsse auf wobei in mindestens einen Kühlmittelanschluss Kühlmittel in das Modul ein- und aus mindestens einem Kühlmittelanschluss Kühlmittel herausströmen kann.

Zum direkten Anschluss bedeutet bevorzugt, dass sich die angeschlossenen Anschlüsse oder Teile der angeschlossenen Anschlüsse berühren, bevorzugt mit einem zwischengelagerten Dichtungselement, besonders bevorzugt ausschließlich mit einem zwischengelagerten Dichtungselement oder gänzlich ohne zwischengelagertes Bauteil/Element.

Bei einem weiteren erfindungsgemäßen Hybridmodul ist an ein Bauteil des Hybridmoduls das Leistungselektronikmodul anordenbar, bevorzugt angeordnet, und durch ein Anordnen des Leistungselektronikmoduls an das Bauteil ist der leistungselektronikmodulseitige Kühlmittelanschluss in Kontakt, bevorzugt Eingriff, mit dem hybridmodulseitigen Kühlmittelanschluss bringbar, bevorzugt gebracht. Bei einem weiteren erfindungsgemäßen Leistungselektronikmodul ist an ein Bauteil des Hybridmoduls das Leistungselektronikmodul anordenbar, bevorzugt angeordnet, und durch ein Anordnen des Leistungselektronikmoduls an das Bauteil ist der leistungselektronikmodulseitige Kühlmittelanschluss in Kontakt, bevorzugt Eingriff, mit dem hybridmodulseitigen Kühlmittelanschluss bringbar, bevorzugt gebracht. Bei einem weiteren erfindungsgemäßen Verfahren wird durch das Anordnen des Leistungselektronikmoduls an das Bauteil der leistungselektronikmodulseitige Kühlmittelanschluss in Kontakt, bevorzugt Eingriff mit der hybridmodulseitigen Kühlmitteleinrichtung gebracht.

Hierdurch ist eine einfache Montage und ein sicherer Anschluss möglich. Bevorzugt wird weiterhin die Stabilität der Verbindung zwischen Hybridmodul und Leistungselektronikmodul durch den gegenseitigen Eingriff, z.B. bei Ausbildung des Kühlmittelanschlusses als Steckeinrichtung, erhöht. Eine Steckeinrichtung bildet bevorzugt eine Steckverbindung aus. Eine Steckeinrichtung weist bevorzugt mindestens ein Steckelement und/oder mindestens ein Buchsenelement auf. Bevorzugt ist das Leistungselektronikmodul an das Hybridmodul angeordnet, so dass ein gegenseitiger Eingriff mindestens zweier Kühlmittelanschlüsse (ein Anschluss je Modul) vorliegt. Ein Bauteil des Hybridmoduls, an dem das Leistungselektronikmodul angeordnet ist oder wird, ist z.B. das Hybridmodulgehäuse, bevorzugt ein in dem Hybridmodulgehäuse befindliches Bauteil des Hybridmoduls, z.B. ein Statorblech.

Bei einem weiteren erfindungsgemäßen Hybridmodul weist der hybridmodulseitige Kühlmittelanschluss eine Öffnung eines Hybridmodulgehäuses und einen die Öffnung umgebenden Stutzen auf. Bei einem weiteren erfindungsgemäßen Leistungselektronikmodul weist der leistungselektronikseitige Kühlmittelanschluss eine Öffnung eines Leistungselektronikgehäuses und einen die Öffnung umgebenden Stutzen auf. Bei einem weiteren erfindungsgemäßen Verfahren wird ein eine Öffnung eines Hybridmodulgehäuses umgebender Stutzen des Hybridmoduls an eine Öffnung eines Leistungselektronikgehäuses oder einen diese leistungselektronikseitige Öffnung umgebenden Stutzen, bevorzugt über ein Dichtungselement, kontaktiert oder es wird ein eine Öffnung eines Leistungselektronikgehäuses umgebender Stutzen des Leistungselektronikmoduls an eine Öffnung eines Hybridmodulgehäuses oder einen diese hybridmodulseitige Öffnung umgebenden Stutzen, bevorzugt über ein Dichtungselement, kontaktiert.

Hierdurch ist eine einfache und gut abdichtbare Verbindung zweier Kühlmittelanschlüsse verschiedener Module möglich. Bei einer bevorzugten Verwendung zweier Stutzen (ein Stutzen am Hybridmodul, ein anderer am Leistungselektronikmodul) ist weiterhin eine vorteilhafte Führung beim Kontaktieren gegeben, sowie bevorzugt ein gegenseitiger Eingriff und die Ausbildung einer Steckverbindung. Dabei weist der eine Stutzen einen größeren Innenumfang als der Außenumfang des anderen Stutzens auf, so dass die Stutzen ineinander greifen können.

Bevorzugt wird anstelle eines Stutzens ein (anderes) die Öffnung umgebendes, aus dem Gehäuse des Moduls vorstehendes Bauteil verwendet, z.B. ein Kamin, ein Rohrstück oder rohrartiges Bauteil, bevorzugt mit konischen Teilstücken.

Ein Dichtungselement ist bevorzugt z.B. eine Gummierung oder ein Dichtring, eine Dichthülse oder ein Dichtwulst. Die Dichtung der Übergabestelle ist bevorzugt radial und/oder axial (bezüglich der Rotorachse) ausgeführt.

Die Übergabe des Kühlmediums ist bevorzugt in der Art ausgeführt, dass eine Kühleinrichtung des Leistungselektronikmoduls einen Kamin beinhaltet, welcher bei Montage der Module in ein Rohrstück oder eine Art Rohrstück am Hybridmodulgehäuse gesteckt wird.

Bei einem weiteren erfindungsgemäßen Hybridmodul weist das Hybridmodul einen zweiten hybridmodulseitigen Kühlmittelanschluss auf, der gleich oder weniger als um einen viertel Umfang des Hybridmoduls von dem ersten Kühlmittelanschluss entfernt angeordnet ist.

Hierdurch sind die Kühlmittelanschlüsse nahe zusammen, was raumsparend ausgenutzt werden kann. Zum Beispiel sind die Kühlmittelanschlüsse mit einem gegenseitigen Versatz von gleich oder weniger als 90°, besonders bevorzugt weniger als 45°, ganz besonders bevorzugt weniger als 20° oder sogar ohne Versatz bezüglich einer Achse (z.B. die Rotorachse), bevorzugt einer Mittenachse, d.h. bevorzugt eine Achse durch einen Mittelpunkt des Hybridmoduls, angeordnet. Die Entfernung der Kühlmittelanschlüsse bezieht sich bevorzugt auf einen Weg entlang des Umfangs des Hybridmoduls.

Ein Umfang ist bevorzugt eine gedachte Linie mit einem gemeinsamen End- und Start-Punkt, die um eine durch den Mittelpunkt des Hybridmoduls verlaufende Achse entlang der Oberfläche des Hybridmoduls führt oder entlang der Oberfläche eines Bauteils des Hybridmoduls, an dem die Kühlmittelanschlüsse angeordnet sind.

Bevorzugt weist das Hybridmodul im Gehäuse eine Strömungsführung bzw. Führung des Kühlmittels (z.B. einen Kanal oder eine Kühlmittelleitung) auf, welche das Kühlmittel entlang eines Wegs führt, der länger ist als der viertel bevorzugt halbe, besonders bevorzugt drei viertel Umfang, bevorzugt entlang eines Wegs führt, der den Mittelpunkt des Hybridmoduls oder eine Mittelachse des Hybridmoduls entlang eines Winkelbereichs von gleich oder mehr als 90°, bevorzugt 180°, besonders bevorzugt 270° umrundet. Ein Winkelbereich ist bevorzugt durch einen an der Achse aufgespannten Winkel zwischen dem Anfang und Ende der Führung des Kühlmittels eingeschlossen.

Zum Beispiel ist der Kühlmittelanschluss direkt neben dem zweiten Kühlmittelanschluss im Kühlkanal angeordnet, so dass das Kühlmedium einmal um den E-Motor fließen kann. Bevorzugt ist ein Kanal zur Statorkühlung vorhanden, welcher Fluid auf dem längeren Pfad zweier möglicher Verbindungspfade zwischen den Kühlmittelanschlüssen um den Stator herum führt. Bei einem weiteren erfindungsgemäßen Hybridmodul weist das Hybridmodul einen zweiten hybridmodulseitigen Kühlmittelanschluss auf, der mehr als einen viertel Umfang des Hybridmoduls von dem ersten Kühlmittelanschluss entfernt angeordnet ist.

Hierdurch sind die Kühlmittelanschlüsse weiter auseinander, was zu besonders günstigen Strömungsverhältnissen innerhalb des Hybridmoduls führt.

Zum Beispiel sind die Kühlmittelanschlüsse mit einem gegenseitigen Versatz von mehr als 90° besonders bevorzugt mehr als 135°, ganz besonders gleich 180° bezüglich einer Achse (z.B. die Rotorachse), bevorzugt einer Mittenachse, d.h. bevorzugt eine Achse durch einen Mittelpunkt des Hybridmoduls, angeordnet. Die Entfernung der Kühlmittelanschlüsse bezieht sich bevorzugt auf einen Weg entlang des Umfangs des Hybridmoduls.

Bevorzugt weist das Hybridmodul im Gehäuse eine Führung des Kühlmittels (z.B. einen Kanal) auf, welcher das Kühlmittel entlang zweier Wege führt, wobei beide Wege gleich lang, sind oder einer länger als der andere Weg ist. Auf dem einen Weg findet bevorzugt eine Umströmung im Uhrzeigersinn statt, auf dem anderen Weg eine gegen den Uhrzeigersinn. Bevorzugt weist die Führung des Kühlmittels am Kühlmittelanschluss, der als Einlass dient, eine abzweigende Gabelung auf und am Kühlmittelanschluss, der als Auslass dienst, eine zusammenführende Gabelung.

Zum Beispiel sind zwei Kanäle zur Statorkühlung vorhanden, welche von dem Einlass in unterschiedlichen Umrundungsrichtungen um den Stator herum zum Auslass führen.

Bei einem weiteren erfindungsgemäßen Hybridmodul ist an dem Hybridmodul das Leistungselektronikmodul, bevorzugt ein erfindungsgemäßes Leistungselektronikmodul angeordnet, bevorzugt befestigt, und das Hybridmodul und das Leistungselektronikmodul sind von demselben Kühlmittelstrom durchströmbar, bevorzugt durchströmt. Bei einem weiteren erfindungsgemäßen Leistungselektronikmodul ist an dem Leistungselektronikmodul das Hybridmodul, bevorzugt ein erfindungsgemäßes Hybridmodul angeordnet, bevorzugt befestigt, und das Hybridmodul und das Leistungselektronikmodul sind von demselben Kühlmittelstrom durchströmbar, bevorzugt durchströmt. Bei einem weiteren erfindungsgemäßen Verfahren wird an dem Hybridmodul das Leistungselektronikmodul, bevorzugt ein erfindungsgemäßes Leistungselektronikmodul angeordnet, bevorzugt befestigt, so dass das Hybridmodul und das Leistungselektronikmodul von demselben Kühlmittelstrom durchströmbar sind, bevorzugt durchströmt werden.

Bevorzugt ist das Leistungselektronikmodul unterhalb des Hybridmoduls angeordnet. Hierdurch wird (z.B. bei Luft) der Transport des Kühlmittels befördert, da erwärmtes Kühlmittel nach oben drängt. Vorteilhafterweise ist ein Einlass in den gemeinsamen Kühlkreislauf in die, bevorzugt unten angeordnete, Leistungselektronik vorhanden, da diese mehr Verlustleistung produziert. Bevorzugt erfolgt die Übergabe des Kühlmittels von dem Leistungselektronikmodul zum E-Motor im unteren Bereich des Hybridmoduls.

Das Hybridmodul weist einen hybridmodulseitigen Kühlmittelanschluss als hybridmodulseitigen Einlass und einen zweiten hybridmodulseitigen Kühlmittelanschluss als hybridmodulseitigen Auslass auf und das Leistungselektronikmodul weist einen leistungselektronikmodulseitigen Kühlmittelanschluss als leistungselektronikmodulseitigen Auslass und einen zweiten leistungselektronikmodulseitigen Kühlmittelanschluss als leistungselektronikmodulseitigen Einlass auf und der leistungselektronikmodulseitige Auslass ist an den hybridmodulseitigen Einlass, bevorzugt direkt, angeschlossen.

Hierdurch wird das Leistungselektronikmodul, in welchem üblicherweise höhere Verlustleistung produziert und abgeführt werden muss, besser gekühlt. Der Auslass des Leistungselektronikmoduls ist bevorzugt an der Oberseite des Leistungselektronikmoduls angeordnet. Der Einlass des Leistungselektronikmoduls ist bevorzugt an einer Stirnseite oder Unterseite des Leistungselektronikmoduls angeordnet. Der Auslass des Hybridmoduls ist bevorzugt an der Oberseite des Leistungselektronikmoduls angeordnet. Der Einlass des Hybridmoduls ist bevorzugt an einer Stirnseite oder Unterseite des Hybridmoduls angeordnet.

Die Erfindung wird nun anhand von Zeichnungen beispielhaft veranschaulicht.

Es zeigen:
**Fig. 1** ein erfindungsgemäßes Hybridmodul und ein erfindungsgemäßes Leistungselektronikmodul, welche von einem gemeinsamen Kühlmittelstrom durchströmbar sind,
**Fig. 2** - **Fig. 5** vier Varianten eines erfindungsgemäßen Hybridmoduls und eines erfindungsgemäßen Leistungselektronikmoduls aufbauend auf Fig. 1
**Fig. 6** eine perspektivische Ansicht eines erfindungsgemäßen Hybridmoduls vor der Montage,
**Fig. 7** eine perspektivische Ansicht eines erfindungsgemäßen Leistungselektronikmoduls, bevorzugt für das Hybridmodul gemäß Fig. 6.

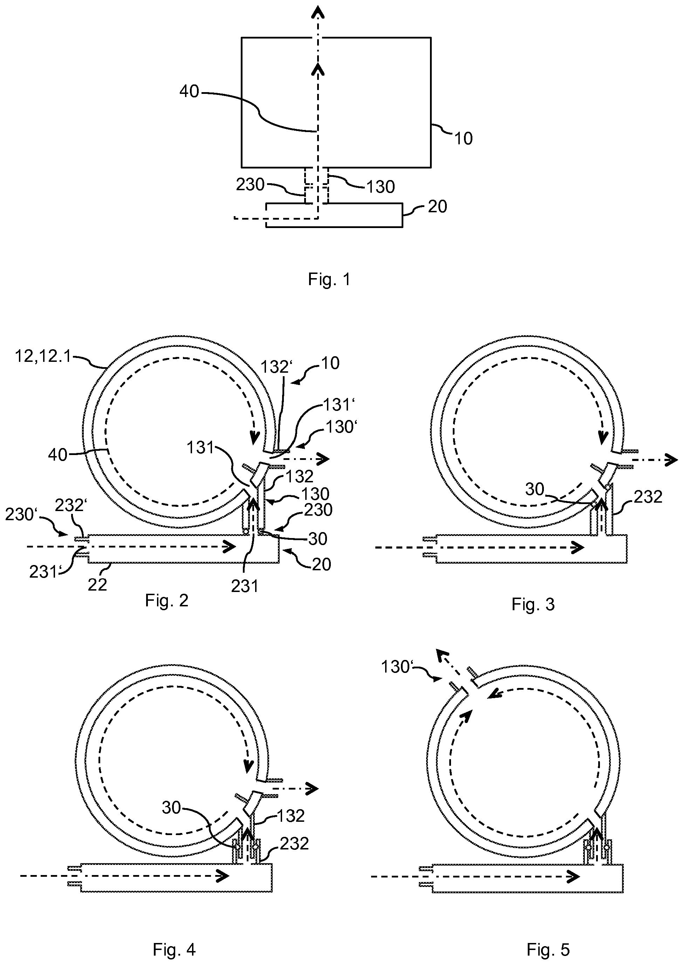

**Fig. 1** zeigt ein erfindungsgemäßes Hybridmodul 10 und ein erfindungsgemäßes Leistungselektronikmodul 20, welche von einem gemeinsamen Kühlmittelstrom 40 durchströmbar sind. Gestrichelt eingezeichnet sind die bevorzugten Kühlmittelanschlüsse 230 und 130. Ein gestrichelt eingezeichneter Strom 40 weist eine niedrigere Temperatur als ein punkt-gestrichelt eingezeichneter Strom 40 auf. Weiterhin ist hier die bevorzugte Ausführung gezeigt, wonach der Kühlmittelstrom 40 von dem Leistungselektronikmodul 20 in Richtung des Hybridmoduls 10 geführt ist bzw. strömt, insbesondere von dem unterhalb des Hybridmoduls 10 angeordneten Leistungselektronikmodul 20 in das Hybridmodul 10.

Bei der Montage wird das Leistungselektronikmodul 20 mit dem Hybridmodul 10 verbunden, bevorzugt, z.B. in der Nähe oder direkt angeordnet und dabei eine Führung eines Kühlmittels gebildet, welche den Kühlmittelstrom 40 durch beide Module 10, 20 führt.

Hierdurch ist es möglich, denselben Kühlmittelstrom 40 in zwei Modulen 10, 20 zur Kühlung zu verwenden. Weiterhin wird ein jeweils separater Kühlmittelstrom für das Hybridmodul 10 und das Leistungselektronikmodul 20 vermieden, wodurch Kosten gespart werden, Montageaufwand vermindert wird und Sicherheit (es müssen weniger Schläuche oder Kanäle verlegt werden) erhöht wird. Durch die hier gewählte Reihenfolge der Durchströmung wird das Leistungselektronikmodul 20, in welchem üblicherweise höhere Verlustleistung produziert und abgeführt werden muss, besser gekühlt. Insbesondere bildet sich durch die Anordnung des Leistungselektronikmoduls 20 unterhalb eine vorteilhafte Strömung in das Hybridmodul 10 aus.

**Fig. 2** - **Fig. 5** zeigen vier Varianten eines erfindungsgemäßen Hybridmoduls und eines erfindungsgemäßen Leistungselektronikmoduls aufbauend auf Fig. 1.

In **Fig. 2** weist das Hybridmodul 10 einen im unteren Drittel des Hybridmoduls 10 angeordneten und nach unten gerichteten hybridmodulseitigen Kühlmittelanschluss 130 als hybridmodulseitigen Einlass auf und einen in der untere Hälfte des Hybridmoduls 10 angeordneten und seitlich gerichteten zweiten hybridmodulseitigen Kühlmittelanschluss 130' als hybridmodulseitigen Auslass auf. Das Leistungselektronikmodul 20 weist einen an seiner Oberseite angeordneten, nach oben gerichteten leistungselektronikmodulseitigen Kühlmittelanschluss 230 als leistungselektronikmodulseitigen Auslass und einen an seiner Stirnseite angeordneten und seitlich gerichteten zweiten leistungselektronikmodulseitigen Kühlmittelanschluss 230' als leistungselektronikmodulseitigen Einlass auf. Der leistungselektronikmodulseitige Auslass ist an den hybridmodulseitigen Einlass über ein umlaufendes Dichtungselement 30 angeschlossen. Das Dichtungselement 30 dichtet axial ab. Der zweite hybridmodulseitige Kühlmittelanschluss 130' ist weniger als um einen viertel Umfang des Hybridmoduls 10 von dem ersten Kühlmittelanschluss 130 entfernt angeordnet. Das Leistungeelektronikmodul 20 weist ein Leistungselektronikgehäuse 22 auf, das Hybridmodul 10 ein Hybridmodulgehäuse 12.1 als Bauteil 12. Die Kühlmittelanschlüsse 130, 130', 230, 230' weisen jeweils eine Gehäuseöffnung 131, 131', 231, 231' des Gehäuses 12.1, 22 des entsprechenden Moduls 10, 20 auf, bzw. sind an einer solchen angeordnet. Die Kühlmittelanschlüsse 130, 130', 230' weisen jeweils Stutzen 132, 132', 232' auf. Das Dichtungselement 30 umrandet die Öffnung 231.

Zur Montage wird die Öffnung 231 des Leistungselektronikmoduls 20 an den Stutzen kontaktiert, wobei zuvor das Dichtungselement 30 dazwischengelegt wird. Beim Betrieb des Hybridmoduls 10 erfolgt eine Umströmung des Mittelpunkts des Hybridmoduls entlang eines Winkelbereichs von beinahe 360°, hier im Uhrzeigersinn.

In diesem Beispiel sind die Kühlmittelanschlüsse 131, und 131' nahe zusammen, was raumsparend ausgenutzt werden kann. Es ist eine einfache und gut abdichtbare Verbindung zweier Kühlmittelanschlüsse 130, 230 verschiedener Module 10, 20 gegeben.

In **Fig. 3** weist im Unterschied zu Fig. 2 der leistungselektronikmodulseitige Kühlmittelanschluss 230 einen Stutzen 232 auf, der über ein Dichtelement 30 an das Hybridmodulgehäuse 12.1 um die Öffnung 131 herum kontaktiert ist. Der hybridmodulseitige Kühlmittelanschluss 130 weist nicht mehr den Stutzen 132 auf. Für die übrigen Bauteile wurde der besseren Übersichtlichkeit halber auf die Bezugszeichen verzichtet, die bereits in Fig. 2 gezeigt sind.

Dies ist eine bauliche Variante, welche je nach Bauraum oder Montagemöglichkeiten vorteilhaft sein kann.

In **Fig. 4** weisen im Unterschied zu Fig. 2 und 3 sowohl der leistungselektronikmodulseitige Kühlmittelanschluss 230 als auch der hybridmodulseitige Kühlmittelanschluss einen Stutzen 232, 132 auf, die über ein Dichtungselement 30 aneinander kontaktiert sind. Das Dichtungselement 30 dichtet radial ab. Die Stutzen 232, 132 greifen gegenseitig ineinander ein. Sie bilden einen Steckkontakt, jeder Stutzen 232, 132 bildet eine Steckeinrichtung.

Hierdurch ist ein Toleranzausgleich möglich, da die Abdichtung auch dann funktioniert, wenn die beiden Module zueinander verschoben werden. Weiter auseinander liegende Kühlmittelanschlüsse 232, 132 sind auch bei den Dichtungsvarianten der Figuren 2 und 3 möglich.

In **Fig. 5** ist im Unterschied zu Fig. 2-4 der zweite hybridmodulseitige Kühlmittelanschluss 130' mehr als einen viertel Umfang des Hybridmoduls 10 von dem ersten Kühlmittelanschluss 130 entfernt angeordnet. Die Kühlmittelanschlüsse 130 und 130' liegen sich um ca. 180° gegenüber.

Hierdurch sind die Kühlmittelanschlüsse 130, 131' weiter auseinander, was zu besonders günstigen Strömungsverhältnissen innerhalb des Hybridmoduls führt. Es bilden sich zwei Ströme aus, wovon einer gegen und einer im Uhrzeigersinn durch das Hybridmodul strömt.

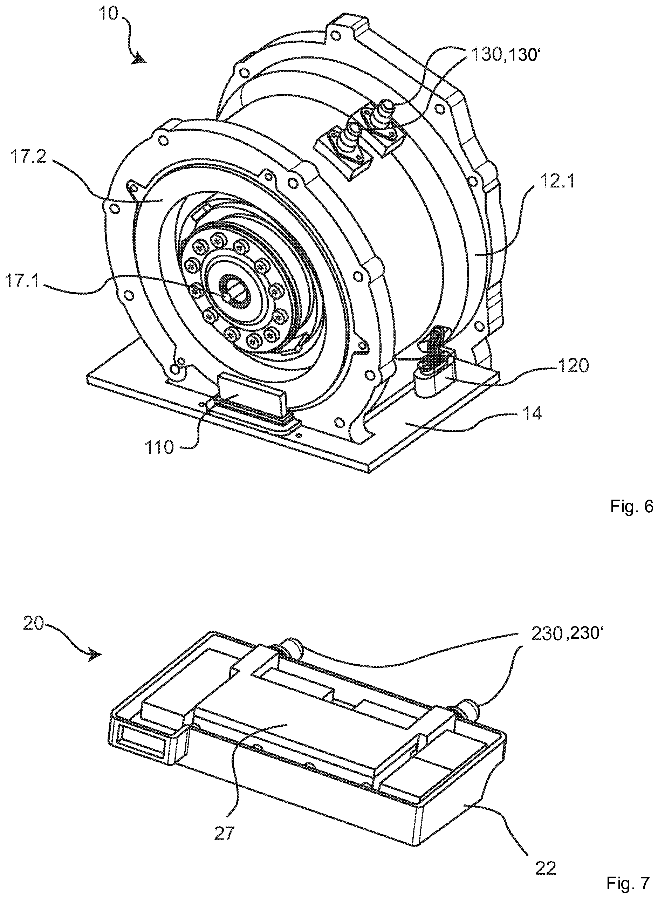

**Fig. 6** zeigt eine perspektivische Ansicht eines erfindungsgemäßen Hybridmoduls 10 aufbauend auf Fig. 1 oder einer anderen der vorigen Figuren vor der Montage. Es sind zum Hybridmodulinneren abgedichtete Anschlüsse an dem Wandbereich 14 vorgesehen: ein hybridmodulseitiger E-Motorstromanschluss 110 und ein hybridmodulseitiger, elektrischer Signal- und/oder Kupplungsaktorikanschluss 120. Ferner weist das Hybridmodul 10 zwei hybridmodulseitige Kühlmittelanschlüsse 130, 130' auf. Zusätzlich ist in dieser Figur auch der Rotor 17.1 und der Stator 17.2 des Hybridmoduls 10 gezeigt.

An dieses Hybridmodul 10 ist in einfacher Weise ein Leistungselektronikmodul 20, z.B. das in vorigen Figuren oder in Fig. 7 gezeigte, radial außerhalb des Rotors 17.1 und Stators 17.2 raumsparend anordenbar.

**Fig. 7** zeigt eine perspektivische Ansicht eines erfindungsgemäßen Leistungselektronikmoduls 20 aufbauend auf Fig. 1 oder einer anderen der vorigen Figuren, bevorzugt für das Hybridmodul 10 gemäß Fig. 6 vor der Montage. Es weist eine Kühleinrichtung 27 auf, welche zwischen zwei Kühlanschlüssen 230, 230' innerhalb des Leistungselektronikgehäuses 22, auf einer dem Hybridmodul zugewandten Platinenseite angeordnet ist. Die Leistungselektronik ist durch die Kühleinrichtung 27 verdeckt.

Die vorliegende Erfindung betrifft die Kühlung eines Leistungselektronik- und eines Hybridmoduls. Es wird ein gemeinsamer Kühlmittelstrom, insbesondere -kreislauf vorgeschlagen, was insbesondere bei einer direkten Anbindung des Leistungselektronikmoduls an das Hybridmoduls vorteilhaft ist. Hierfür weist das Leistungselektronikgehäuse einen Einlass und einen Auslass für das Kühlmedium auf. Das Hybridmodul weist ebenso einen Ein- und Auslass aus. Der Eingang des Hybridmoduls und der Ausgang des Leistungselektronikmoduls sind miteinander gekoppelt. Bevorzugt sind hierfür folgende zwei Varianten:
Ein- und Auslass sind ineinander gesteckt und liegen koaxial, wobei
a) entweder eine Radialdichtung dazwischen vorgesehen ist und/oder
b) eine Axialdichtung auf der einen oder anderen Seite vorgesehen ist.

Für den Kühlkanal innerhalb des Hybridmoduls sind zwei Varianten bevorzugt:
i) Ein- und Auslass liegen 180° beabstandet (des Kühlmedium fließt in beide Richtungen), oder
ii) Ein- und Auslass liegen nahe beieinander (das Kühlmedium umfließt das Hybridmodul im Inneren fast vollständig).

### Bezugszeichenliste

- 10: Hybridmodul
- 12.1: Hybridmodulgehäuse
- 14: Wandbereich des Bauteils
- 17.1: Rotor
- 17.2: Stator
- 20: Leistungselektronikmodul
- 22: Leistungselektronikgehäuse
- 27: Kühleinrichtung
- 30: Dichtungselement
- 40: Kühlmittelstrom
- 110: hybridmodulseitiger E-Motorstromanschluss
- 120: hybridmodulseitiger, elektrischer Signal- und/oder Kupplungsaktorikanschluss
- 130: hybridmodulseitiger Kühlmittelanschluss
- 130': zweiter hybridmodulseitiger Kühlmittelanschluss
- 131: Öffnung
- 131': zweite Öffnung
- 132: Stutzen
- 132': zweiter Stutzen
- 230: leistungselektronikmodulseitiger Kühlmittelanschluss
- 230': zweiter leistungselektronikmodulseitiger Kühlmittelanschluss
- 231: Öffnung
- 231': zweite Öffnung
- 232: Stutzen
- 232': zweiter Stutzen

## Patentansprüche

1. Hybridantriebseinheit, die aufweist:
ein Hybridmodul (10); und
ein an dem Hybridmodul (10) angeordnetes Leistungselektronikmodul (20), wobei
das Hybridmodul (10) und das Leistungselektronikmodul (20) von demselben Kühlmittelstrom (40) durchströmbar sind,
**dadurch gekennzeichnet, dass**
das Hybridmodul (10) einen hybridmodulseitigen Kühlmittelanschluss (130) als hybridmodulseitigen Einlass und einen zweiten hybridmodulseitigen Kühlmittelanschluss (130') als hybridmodulseitigen Auslass aufweist,
das Leistungselektronikmodul (20) einen leistungselektronikmodulseitigen Kühlmittelanschluss (230) als leistungselektronikmodulseitigen Auslass und einen zweiten leistungselektronikmodulseitigen Kühlmittelanschluss (230') als leistungselektronikmodulseitigen Einlass aufweist, und
der leistungselektronikmodulseitige Auslass an den hybridmodulseitigen Einlass angeschlossen ist.

2. Hybridantriebseinheit gemäß Anspruch 1, wobei der hybridmodulseitige Kühlmittelanschluss (130) direkt an den leistungselektronikmodulseitigen Kühlmittelanschluss (230) angeschlossen ist.

3. Hybridmodul (10) gemäß einem der vorhergehenden Ansprüche, wobei der hybridmodulseitige Kühlmittelanschluss (130) eine Öffnung (131) eines Hybridmodulgehäuses (12.1) und einen die Öffnung (131) umgebenden Stutzen (132) aufweist.

4. Hybridmodul (10) gemäß einem der vorhergehenden Ansprüche, wobei der zweite hybridmodulseitige Kühlmittelanschluss (130') gleich oder weniger als um einen viertel Umfang des Hybridmoduls (10) von dem ersten Kühlmittelanschluss (130) entfernt angeordnet ist.

5. Hybridmodul (10) gemäß einem Ansprüche 1 bis 4, wobei der zweite hybridmodulseitige Kühlmittelanschluss (130') mehr als einen viertel Umfang des Hybridmoduls (10) von dem ersten Kühlmittelanschluss (130) entfernt angeordnet ist.

## Claims

1. Hybrid drive unit, which has
a hybrid module (10) and
a power electronics module (20), which is arranged on the hybrid module (10), it being possible for the same coolant flow (40) to flow through the hybrid module (10) and the power electronics module (20),
**characterized in that**
the hybrid module (10) has a coolant connection (130) on the hybrid module side as an inlet on the hybrid module side, and a second coolant connection (130') on the hybrid module side as an outlet on the hybrid module side,
the power electronics module (20) has a coolant connection (230) on the power electronics module side as an outlet on the power electronics module side, and a second coolant connection (230') on the power electronics module side as an inlet on the power electronics module side, and
the outlet on the power electronics module side is connected to the inlet on the hybrid module side.

2. Hybrid drive unit according to Claim 1, wherein the coolant connection (130) on the hybrid module side is connected directly to the coolant connection (230) on the power electronics module side.

3. Hybrid module (10) according to one of the preceding claims, wherein the coolant connection (130) on the hybrid module side has an opening (131) of a hybrid module housing (12.1) and a nozzle (132) surrounding the opening (131).

4. Hybrid module (10) according to one of the preceding claims, wherein the second coolant connection (130') on the hybrid module side is arranged at a distance from the first coolant connection (130) that is equal to or less than a quarter of a circumference of the hybrid module (10) .

5. Hybrid module (10) according to one of Claims 1 to 4, wherein the second coolant connection (130') on the hybrid module side is arranged at a distance from the first coolant connection (130) that is more than one quarter of the circumference of the hybrid module (10).

## Revendications

1. Unité d'entraînement hybride, présentant :
un module hybride (10) ; et
un module électronique de puissance (20) disposé au niveau du module hybride (10),
le module hybride (10) et le module électronique de puissance (20) étant parcourus par le même flux de réfrigérant (40),
**caractérisée en ce que**
le module hybride (10) présente un raccord de réfrigérant côté module hybride (130) en tant qu'entrée côté module hybride et un deuxième raccord de réfrigérant côté module hybride (130') en tant que sortie côté module hybride,
le module électronique de puissance (20) présente un raccord de réfrigérant côté module électronique de puissance (230) en tant que sortie côté module électronique de puissance et un deuxième raccord de réfrigérant (230') côté module électronique de puissance en tant qu'entrée côté module électronique de puissance, et
la sortie côté module électronique de puissance est raccordée à l'entrée côté module hybride.

2. Unité d'entraînement hybride selon la revendication 1, dans laquelle le raccord de réfrigérant côté module hybride (130) est directement raccordé au raccord de réfrigérant côté module électronique de puissance (230).

3. Module hybride (10) selon l'une quelconque des revendications précédentes, dans lequel le raccord de réfrigérant côté module hybride (130) présente une ouverture (131) d'un boîtier de module hybride (12.1) et une tubulure (132) entourant l'ouverture (131).

4. Module hybride (10) selon l'une quelconque des revendications précédentes, dans lequel le deuxième raccord de réfrigérant côté module hybride (130') est disposé à une distance du premier raccord de réfrigérant (-130) inférieure ou égale à un quart de la périphérie du module hybride (10).

5. Module hybride (10) selon l'une quelconque des revendications 1 à 4, dans lequel le deuxième raccord de réfrigérant côté module hybride (130') est disposé à une distance du premier raccord de réfrigérant (130) égale à plus d'un quart de la périphérie du module hybride (10).
